(19) Europäisches Patentamt
European Patent Office
Office européen des brevets

(11) **EP 1 627 522 B1**

(12) **EUROPEAN PATENT SPECIFICATION**

(45) Date of publication and mention
of the grant of the patent:
**16.09.2009 Bulletin 2009/38**

(51) Int Cl.:
***H04M 17/00*** *(2006.01)* ***H04L 12/14*** *(2006.01)*
***H04M 15/12*** *(2006.01)*

(21) Application number: **04728191.0**

(22) Date of filing: **19.04.2004**

(86) International application number:
**PCT/FI2004/000239**

(87) International publication number:
**WO 2004/107725 (09.12.2004 Gazette 2004/50)**

(54) **METHOD AND SYSTEM FOR CONTROLLING PREPAID DATA SERVICES**

VERFAHREN UND SYSTEM ZUR STEUERUNG VON PREPAID-DATENDIENSTEN

PROCEDE ET SYSTEME PERMETTANT DE CONTROLER DES SERVICES PREPAYES DE TRANSMISSION DE DONNEES

(84) Designated Contracting States:
**AT BE BG CH CY CZ DE DK EE ES FI FR GB GR HU IE IT LI LU MC NL PL PT RO SE SI SK TR**

(30) Priority: **28.05.2003 FI 20030802**

(43) Date of publication of application:
**22.02.2006 Bulletin 2006/08**

(73) Proprietor: **Nokia Corporation**
**02150 Espoo (FI)**

(72) Inventor: **TAKALA, Jari**
**FI-01650 Vantaa (FI)**

(74) Representative: **Ruuskanen, Juha-Pekka et al**
**Page White & Farrer**
**Bedford House**
**John Street**
**London**
**WC1N 2BF (GB)**

(56) References cited:
**EP-A2- 1 404 101** **WO-A2-03/025870**

**Description**

BACKGROUND OF THE INVENTION:

Field of the Invention

The present invention relates to control of prepaid data services. In particular, the present invention relates to a method for controlling provision of prepaid data services of at least two service groups of different charging criteria in a network. The present invention relates also to a system for controlling prepaid data services and a communication system configured to provide prepaid services.

Description of the Related Art

Users may be provided with various types of services via a communication system. The communication system can be seen as a facility that enables communication between two or more entities such as user equipment and/or networks entities or other nodes associated with the communication system. The communication may include, for example, communication of various kinds of data such as voice data, electronic mail (email), text messages, content data, multimedia and so on. In many cases, the services may be charged in advance. This is called prepayment.

In the communication of voice data, prepaid services have already been successfully used. The prepayment may also be applied to other communication services than voice services. However, when not strictly applied to voice services, there are some problems arising from the complexity of the data. There may be numerous different tariffs and the consumption of different services may vary greatly. For example, a data session on the Internet may typically be charged by the byte. A connection may stay online although it might not be actively used during a long period. Then, there might be a sudden consumption of many megabytes in few instants. The consumption of resources may be substantially diversified. For example, a user may wish to use text messaging and/or multimedia and/or any other service. Therefore there may be a need to apply different tariffs to services of different natures. The terminal might also consume several services at the same time compared to a typical only one telephone call at a time.

The prepaid charging is traditionally implemented so that a certain amount of money is reserved in advance for each service separately. The reservation is then, based on subscriber's behaviour, committed or rejected. The network element measuring the consumption (chargeable traffic) does not necessarily know anything about the actual price of the service. Typically there is a charging device which reserves the money from the prepayment system and a rating device that translates the amount of reserved money to measurable units (e.g. to minutes) the subscriber may consume. When the reserved amount has been consumed by the service, it is reported to the charging device. A new amount of money for that service may then be asked from the prepayment system. This is repeated as long as needed.

The packet data services may have largely different prices and charging criteria. For example, a user might be charged based on at least one of the following different criteria:

$0.20 for each news page accessible through HTTP (Hypertext Transfer Protocol) at www.news.com (hit charging),
$0.10 for each news page accessible through HTTP at www.rumours.com (hit charging),
$1 per megabyte as a base charge for any unlisted traffic (volume charging), free of charge traffic for HTTP access to www.guides.operator.com,
$1 per 10 kilobytes for sending e-mail with SMTP (Simple Mail Transfer Protocol) at mail.operator.com (volume charging),
$1 per message for sending e-mail with SMTP at mail.operator.com (transaction charging) the unit price being possibly dependent, for example, on
the size of the message, and
$1 per 10 minutes of video streams from www.movie.com (time charging).

This list might be continued on and on.

New services are introduced to the operator networks all the time. The new services may typically be packet data services. They may often be well adapted to a prepayment idea. To avoid more complicated network architecture, the operators may wish to interface the charging of the new services with existing prepayment systems.

A trivial solution for integrating the new services to existing prepayment system is to have dedicated charging sessions for each charging criteria for each user.

There are however numerous problems with dedicated charging sessions. For example, if the money is reserved as the service is used, the prepayment system gets easily overloaded since there would be huge amount of signalling. This occurs especially if the services are used with advanced devices (like laptop computers) instead of simple devices such as telephones.

With advanced devices it is possible to use simultaneously many charging criteria. If the money is reserved in advance for each and every service, the user might not have enough resources reserved for all services. It is also possible that the user might not have enough money in advance reservations that would be needed for using all services. However, taking the total money, the user might have enough for each service if used individually. If the measuring device knew the actual prices, it would distribute the intelligence to the network. This would cause managerial complexity and challenges when the pricing is changed.

Therefore, there is a need for an improved system for controlling prepaid data services in a network. In particular, it might be advantageous to try to minimize the signalling between the prepayment system and the device measuring and reporting the usage. It might also be desirable to be able to consume all allocated money, even without the device knowing anything about the actual prices.

A known document, WO 03/025870A2, discloses a system including a rating engine and a balance manager. The balance manager maintains a database having accounts, where the accounts have an account balance. The balance manager is operative to receive event data, calculate a reservation account based on the event data, determine a service unit quantity based on the reservation account, and the reservation account against the pre-paid account.

Another known document, US2003/0014367A1, discloses a prepayment system where a downlink/uplink ratio may be metered and applied in allocating downlink and uplink information units to a downlink account threshold and an uplink account threshold, respectively. The number of downlink information units and the number of uplink information units may then be metered separately and each number compared to the appropriate account threshold. In response to the downlink account threshold or the uplink account threshold being reached, remaining information units may be reallocated between a new downlink account threshold and a new uplink account threshold.

A yet further known document, WO02/06760081, discloses a prepayment system that monitors a data network in order to determine whether a particular request in data transfer should be authorised or continued according to a prepaid amount available in the account of the system. A class of service may be assigned one or more rules. Each rule may be determined according to various characteristics. One such characteristic may be the direction of data transfer, that is, up or down. A weight may be allocated for each rule.

SUMMARY OF THE INVENTION

Embodiments of the present invention aim to address one or several of the above problems or issues.

According to an embodiment of the present invention, there is provided a method as defined in claim 1.

In a more specific embodiment, the method includes the further step of defining a proportional data delivery limit for each service group as a proportion of the initial data delivery limit.

In a more specific embodiment, the method includes the further step of defining a pricing weight for each service group as a proportion of the sum of the proportional data delivery limits to the initial data delivery limit of the group.

In certain embodiments of the present invention, the method includes the further step of sending a report from the measuring device to the rating device after all of the reserved resources are used.

In certain embodiments of the present invention, the method includes the further step of defining the initial data delivery limit as an amount of service worth the same amount of money for each service group.

According to a further embodiment of the present invention, there is provided a measurement device as claimed in claim 8.

BRIEF DESCRIPTION OF THE DRAWINGS

The invention will now be described in further detail, by way of example only, with reference to the following examples and accompanying drawings, in which:

Figure 1 shows an example of an arrangement in which the embodiments of the present invention may be implemented.
Figure 2 shows a flow chart for an embodiment of the invention.
Figure 3 shows a flow chart of the function of the measuring device in accordance with one embodiment of the invention.

DETAILED DESCRIPTION OF THE PREFERRED EMBODIMENTS

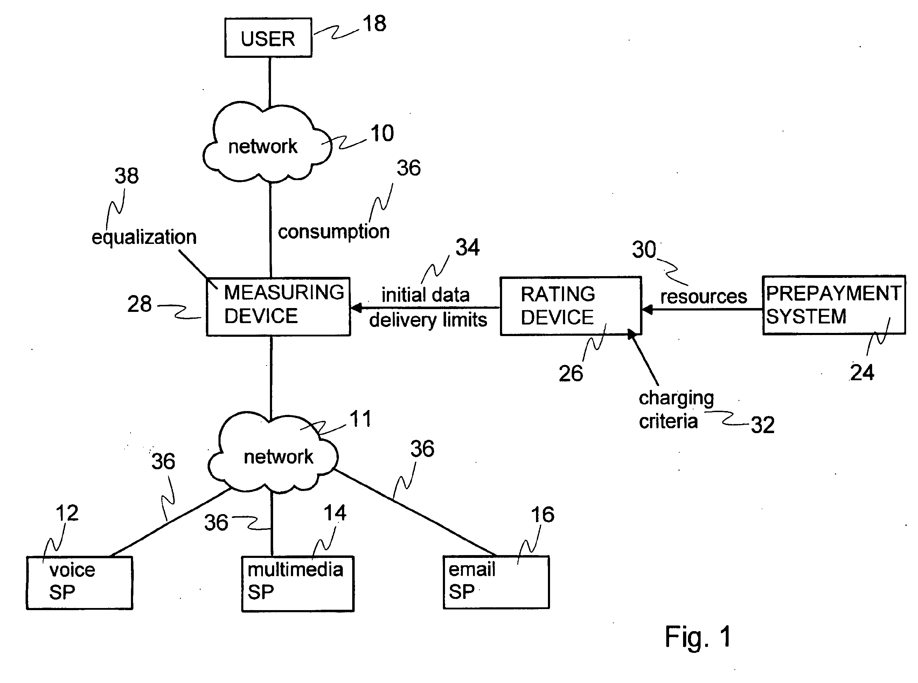

Figure 1 shows an example of a communication system configured for provision of services for users via a data communication network. The communication system of Figure 1 is shown to comprise communication networks 10 and 11, a plurality of service providers (SP) 12,14 and 16, and an end-user 18.

In the example of Figure 1, the service providers are providing different data services such as voice 12, multimedia 14 and email 16. In connection with the present invention, a service provider typically provides services by communicating data, such as voice, images, moving images or combinations thereof or any other form of service provisioning that may occur via a communication network.

The communication networks 10 and 11 may be any appropriate data communication networks. For example, the communication network 10 may be an operator's core network. The communication network 11 may be a public network, such as the Internet, or an operator's backbone network. It shall be appreciated that although networks 10 and 11 are provided in the preferred embodiment shown in Figure 1 by means of two different networks, the data communication facility may be provided by means of a data communication network. For example, all communication may occur via the public data network 10.

The terms user, end-user and subscriber refer to a subject, such as a person, a company, a system or a device, using a service provided by the service provider. It shall be appreciated that Figure 1 is only an example showing three service providers and an end-user and that the number of these entities may differ substantially from the shown.

The arrangement of Figure 1 also illustrates a prepayment system 24, a rating device 26 and a measuring device 28 configured for operation in accordance with certain embodiments of the present invention. The operation of the exemplifying prepayment system 24, rating device 26 and measuring device 28 will become clear from the description below. The rating device 26 may also be referred to as a charging and rating device.

The prepayment system 24 comprises typically a database hosting prepaid accounts of the users. The prepayment system 24 may also follow the balances of the prepaid accounts. A prepaid account is typically a contract between the user and the operator. The user may place a certain amount of resources, typically money, to his prepaid account. The prepayment system 24 then releases these resources 30 in a certain manner to pay services requested by the user and provided by a service provider requiring prepayment.

In preferred embodiments, the user may consume services from several charging classes simultaneously or successively. The charging classes may be defined by different units, for example one class may be charged for time and another class for volume, like bytes, and yet another class for hits, like URL (Uniform Resource Locator) hits or TCP (Transmission Control Protocol) connection establishment. There may also be different charging criteria even if the measured units are the same, for example bytes. In the context of the embodiments these services of different charging criteria form each a service group.

The rating device 26 may reserve resources, such as money, from the prepayment system 24. The rating device 26 receives the charging criteria 32 of the service providers 12, 14 and 16. The information may come from the service providers or from other source, such as the operator or local configuration. The rating device 26 then sets initial data delivery limits 34 for each service group individually. The maximum consumable amounts in appropriate units, such as minutes, kilobytes, hits or the like, are informed to the measuring device 28. Preferably, the maximum consumable amounts for all services are sent in one message. The measuring device 28 may then take care that the units are reallocated when needed between the service groups. In this way, it is possible to use all the money reserved from the prepayment system 24 irrespective of the initial data delivery limits 34. The measuring device 28 may also be able to report the consumption for all the service groups. No communication between the measuring device 28 and the rating device 26 and thus the prepayment system 24 is needed before all the reserved resources 30 are used.

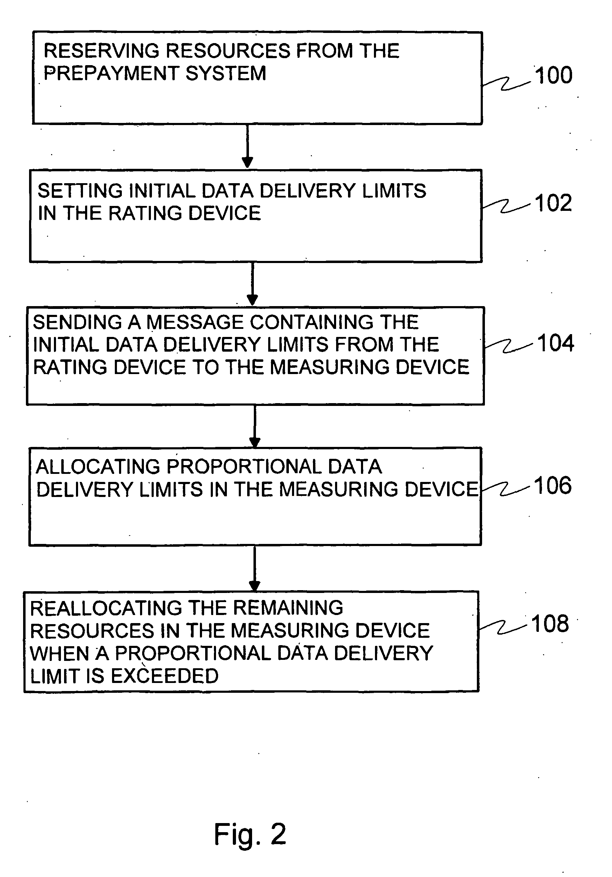

The above procedure is shown in a flow chart in Figure 2. Resources are reserved from the prepayment system, step 100. An initial data delivery limit is set at step 102 in the rating device for each group based on the resources and information about the charging criteria. A message containing information about the initial data delivery limits is sent from the rating device to the measuring device, step 104. Proportional data delivery limits are allocated in the measuring device for each service group individually at step 106. The remaining resources are reallocated at step 108 in the measuring device to the service groups based on pricing weights of the service groups to obtain new proportional data delivery limits for each service group individually, the new proportional data delivery limits being for use in delivery of data after a service group has exceeded its proportional data delivery limit.

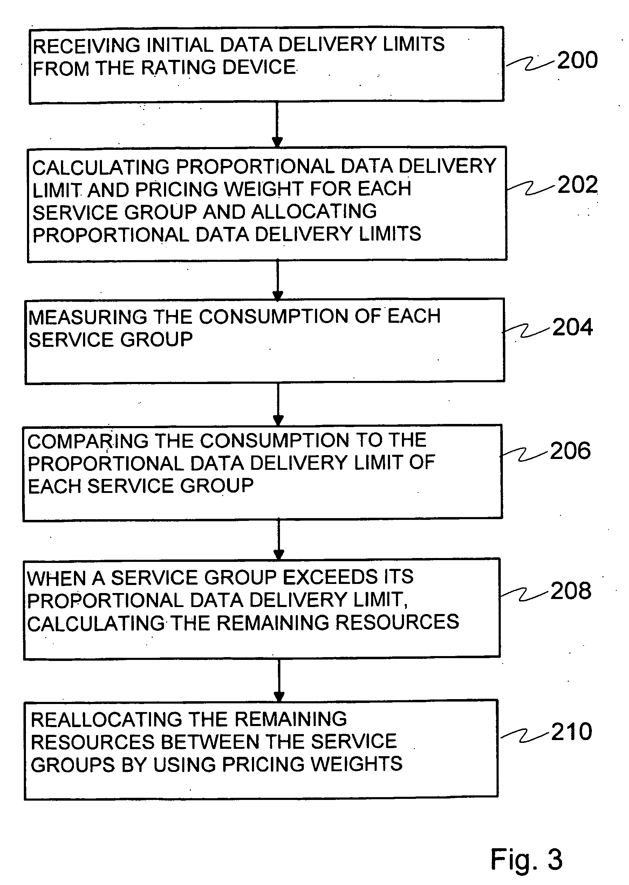

The measuring device 28 reallocates the remaining resources between the service groups when the maximum consumable amount of a service is used by at least one service group. The reallocation may be realized by using quota equalization 38. The quota equalization enables to make sure that all money allocated by the rating device 26 may be consumed before new limits are asked. The aim of the quota equalization is to minimize the traffic from the measuring device 28 towards the rating device 26 and the actual prepayment system 24. The quota equalization is a process of re-dividing the remaining resources. It is an iterative process and it may continue as long as there are any resources left. A possible equalization process taking place in the measuring device is shown in Figure 3.

The rating device 26 is the system interfacing the actual prepayment system 24. The rating device 26 may reserve certain amount of resources 30, typically money, from the prepayment system 24. The rating device 26 may be in contact with the service providers 12, 14 and 16. The rating device 26 thus knows the charging criteria 32 and is able to allocate initial data delivery limits 34 to the service groups based for example on the unit price of each group. In the quota equalization 38, the money is advantageously divided evenly to the groups. This means that each service group in quota equalization is preferably assigned amount of service worth the same amount of money so that the expensive groups get smaller limits than the cheaper groups. The measuring device 28 does not need to know anything about prices.

After the measuring device 28 has received the list of the initial data delivery limits 34 for the service groups at step 200, it may calculate at step 202 a proportional data delivery limit and a pricing weight for each group. The proportional limit may be at its simplest form the amount of resources belonging to the group if the resources were divided to the groups before calculating the limits. The limit for each group can be given as the whole amount of resources which could be consumed by each group. The proportional limit is useful because it defines the safe amount of service that may pass for each group before the volume needs to be further examined, even if the traffic would be spread across multiple groups. The pricing weight shows the importance of the limit of a certain group compared to the total data delivery limits.

When the service, or data delivery, is underway, the measuring device 28 measures the consumption 36 of each service group, step 204. The consumption is compared against the proportional data delivery limit of each group, step 206. When a service group exceeds its proportional data delivery limit, the remaining total free limit is calculated, step 208. The remaining total free limit corresponds the amount of resources that has not been spent from the resources reserved by the rating device 26 from the prepayment system 24.

The measuring device then reallocates at step 210 the remaining resources between the service groups. The reallocation is based on the pricing weights calculated by the measuring device 28 earlier for each service group. If there is no resources left in the total free limit, no equalization is performed.

The rating device 26 and the measuring device 28 may communicate using any appropriate protocol. In the following, certain variables used in the communication between the rating device 26 and the measuring device 28 in connection with certain embodiments of the present invention are defined. The examples given below are only examples and any appropriate devices or protocols may be used.

An appropriate variable may be used to inform the measuring device what service groups can be equalized together. This functionality reduces the amount of accounting packets that needs to be transferred between the measuring device and the rating device. Based on the variable the rating device is able reserve money to be used among several service groups without specifying explicitly what is the exact volume limit on each group. So the volume representing the money may be re-divided between the groups as long as any unused quota is left. If the money for a specific group comes from a different source, for example from a sponsor, it may be excluded from equalization.

In the following example the equalization variable is provided by a variable "eg". By default, i.e. when no "eg" variable is present, no equalization is performed. Plain "eg" could be used to mean that all groups are equalized. Individual groups can be marked as belonging to the equalization. For example, character (+) could mean that a group belongs to equalization. Character (-) could then mean that the group does not belong to the equalization. As an example, the parameter "eg" may have the form "eg=+--++--". If there are less groups in the "eg" list than limits, the rule might be that the extra groups are excluded from the equalization. So "eg=+--++--" and "eg=+--++" may in certain embodiments mean the same. Likewise, the absence of "eg" and "eg=" may mean that no groups are to be equalized.

The groups sharing the same monetary source and belonging to the equalization process, may each be given the maximum volume limit. This would mean that each group alone could consume all the money, if only that group is used.

The equalization may get the proportional weights of the groups based on the volume allocations, as described below.

One or more equalization groups may be used at the same time.

Variable "ru" is used to indicate the reporting limits for several service groups for the measuring device. The limits may be separated with slashes (/) and the values may represent the total traffic (= inbound + outbound). Variable "ru" could also represent volume, time, amount of hits and so on as long as only one criterion is for use as a limit criteria. If a group is part of equalization (see "eg"), the reporting limit may be the maximum volume that may belong to that group. In certain embodiments, it is possible that traffic to some groups is free and thus unlimited. This may, for example, be indicated to the measuring device by a plus sign ("+") or any other appropriate way. Thus, the variable "ru" may for example have values "ru=+/10/50˚ to indicate that the group 0 is free, and thus no reporting limit applies, group 1 may have reporting limit of 10kB, and group 2 may have a limit of 50kB.

The equalization can be controlled by the rating device with the "eg" variable. An empty value "eg=" disables the equalization. When the rating device knows (or assumes) there is a possibility that the user will run out of money when the given limits have been reached, it may send to the measuring device a traffic suspension variable indicating to the measuring device that no chargeable traffic should be allowed through after the measuring device sends the next report. This can be used by the rating system when allocating the limits representing the last pennies of the user. This indication is preferably sent along with the data delivery limits.

When the measuring device receives the traffic suspension variable, it may count traffic and carry out quota equalization(s) as usual. When the usage limits are reached, the measuring device sends an update message to the rating device and starts blocking the user's traffic until a reply has been received.

This blocking may apply only to the group that has reached the limit. If the equalization is disabled globally or only for the exhausted group, traffic may be allowed to flow to the groups that have not reached the limits. With the traffic suspension variable the rating device can guarantee that the users will not get any free traffic that might be flowing through before the reply is processed by the measuring device.

In the following a preferred quota equalization mechanism is explained with reference to a mathematical representation.

For simplicity of the presentation, it is assumed that the variable "eg" is filled with "+" characters, so all the service groups are included in the equalization process.

Let $q_i$, be the limit for group i at the first round, when $q_{i_1}$, i = 1... n is received from the rating device. So, the measuring device receives in the first message a packet ru=$q_{1_1}$/$q_{2_1}$/.../$q_{n_1}$. Generally, the limit for group i on checking interval j (j = 1...) is denoted by $q_{ij}$. $l_{ij}$ designates the proportional limit for group i at the round j and it is defined as

$$l_{i_j} = \frac{q_{i_j}}{n}, i = 1...n$$

The total limit $L_j$ for the volume on reporting interval j is defined as

$$L_j = \sum_{i=1}^{n} l_{i_j}$$

Since the prices for the groups may be different, the total price for all groups can be calculated by defining a pricing weight peter each group i(i = 1... n) at round j (j = 1... ) as

$$p_{i_j} = \frac{L_j}{n * l_{i_j}} \left( = \frac{L_j}{q_{i_j}} \right)$$

In addition, a multiplier for adjusting the limits while reassigning is needed. The weight of each group i at round j is

$$w_{i_j} = \frac{l_{i_j}}{L_j}$$

and it is well chosen since

$$\forall j : \sum_{i=1}^{n} w_{i_j} = 1.$$

Let $v_{ij}$ be the measured volume for group i on the jth round. When

$$\exists i : v_{i_j} > l_{i_j}$$

the group i has exceeded its limit for the round j. Limits for each i on round j+1 ($l_{i_{j+1}}$) are calculated based on the remaining limit $L_{j+1}$:

$$L_{j+1} = \sum_{i=1}^{n} \left( l_{i_j} - v_{i_j} \right) * p_{i_j}$$

$$l_{i_{j+1}} = w_{i_j} * L_{j+1}$$

If $L_{j+1} < 0$, the equalization has failed and the measuring device may report the consumption to the rating device.

**EXAMPLES**

Example 1

There are 3 differently priced groups, first having 1 unit for $1, second 1 unit for $2 and third 1 unit for $4. The rating device reserves $36 and calculates the volumes worth the money to all groups that belong to equalization. Thus the rating device replies to the measuring device with "eg=+++" and "ru=36/18/9". If the traffic consists only of 3 units for the latest group, the user has consumed volume worth $12 (=3 units * $4).

If we re-divide the remaining $24 this means each group gets proportional limit worth $8, leading to new limits of 8, 4 and 2 units.

If the figures are used in the above formulae, we will see how the quota equalization handles the same situation without knowing anything about the real prices. In this case n=3 and $q_{1_1}$ =36, $q_{2_1}$ =18 and $q_{3_1}$=9, leading to

$$l_{1_1} = \frac{q_{i_1}}{3} = \frac{36}{3} = 12$$

$$l_{1_2} = \frac{q_{i_2}}{3} = \frac{18}{3} = 6$$

$$l_{1_3} = \frac{q_{i_3}}{3} = \frac{9}{3} = 3$$

$$L_1 = \sum_{i=1}^{3} l_{i_1} = 12 + 6 + 3 = 21$$

The traffic consumes only the third group, having volume of 3 units. Thus $v_{3_1}$ increases and $v_{3_1} \geq l_{3_1}$ (because $v_{3_1} \geq 3$). Actually according to the formula it should be > instead of ≥, but for simplicity of the presentation we let the equality to trigger the process. So now equalization is performed:

$$p_{i_j} = \frac{L_1}{q_{i_1}} \Rightarrow p_{1_1} = \frac{21}{36}, p_{2_1} = \frac{21}{18}, p_{3_1} = \frac{21}{9}$$

$$w_{i_j} = \frac{l_{i_1}}{L_1} \Rightarrow w_{1_1} = \frac{12}{21}, w_{2_1} = \frac{6}{21}, w_{3_1} = \frac{3}{21}$$

Now we can calculate the values for the second round, when j=2. First we calculate the $L_2$:

$$L_2 = \sum_{i=1}^{3} \left( l_{i_1} - v_{i_1} \right) * p_{i_1} = (12-0)*\frac{21}{3*12} + (6-0)*\frac{21}{3*6} + (3-3)*\frac{21}{3*3}$$

$$= \frac{12*21}{3*12} + \frac{16*21}{3*6} = 2*\frac{21}{3} = 14$$

According to our formula $l_{ij+1} = w_{ij} * L_{j+1}$, thus we get

$$l_{1_2} = w_{1_1} * L_2 = \frac{12}{21}*14 = 12*\frac{2}{3} = 8$$

$$l_{2_2} = w_{2_1} * L_2 = \frac{6}{21}*14 = 6*\frac{2}{3} = 4$$

$$l_{3_2} = w_{3_1} * L_2 = \frac{3}{21}*14 = 3*\frac{2}{3} = 2$$

Thus the formula gave us the results that were expected, without using the prices.

Example 2

In some embodiments, the pricing might be different for different times of the day or week, for example. This may also be easily implemented in a measuring device configured in accordance with the above described principles by splitting the service to several service groups based on the time. When the tariff time changes, the traffic is considered to belong to a different service group. This is described in the following example:

Let's define 2 different services: Service A is free of charge and service B has a fee of $1/MB during the office hours (8am-5pm) and $0.50 otherwise. In the measuring device any service may have a validity interval, so we need to define one additional service group in order to enable two tariffs for the same service (in this case service B). Thus we end up in having following service groups: 0 for free traffic for service A, service group 1 for "service B for $1 during office hours" and a service group 2 for "service B for $0.50 on off-time".

We can easily see that user's traffic at any time can go to service classes 0 and 1 or 0 and 2, but never to all three of them.

When the rating device reserves $2 from the prepayment system, it will give out the quota to the measuring device in "ru" variable as ru=+/2048/4096. This means that class 0 is free, class 1 may use 2 MB and class 2 may use 4 MB.

Let's assume that there is no tariff change and it is daytime. So the traffic goes to classes 0 and 1. The proportional limit for class 1 ($l_{1_1}$) is 2048/2 = 1024. After the user has generated 1 M B traffic to class 1 ($v_{1_1}$ = 1024), the proportional limit for class 1 has been consumed ($v_{1_1} \geq l_{1_1}$) and in money $1 has been consumed.

If the rating device allows, the measuring device does the equalization, which leads to proportional limits $l_{1_2}$ = 512 and $l_{2_2}$ = 1024 (the remaining $1 is re-divided with the original proportions to the 2 chargeable classes). And so forth until the user has generated traffic worth all $2, meaning 2MB to the service class 1. After that the measuring device asks for more quota from the rating device.

The same pattern applies to the nighttime.

Then let's assume the clock is 5pm, the original quotas were like above (ru=+/2048/4096), and user has generated 512 kB traffic for class 1 (v11 = 512).

From now on the chargeable traffic goes to class 2. So after additional 2MB to class 2 ($v_{2_1}$ = 2048) - and in total 2,5MB of traffic - the situation is that $v_{2_1} \geq l_{2_1}$ thus the equalization takes place with values:

$$l_{1_1} = 1024$$

$$l_{2_1} = 2048$$

$$\Rightarrow L_1 = 3072$$

$$p_{1_1} = \frac{3072}{2} * 1024 = \frac{3}{2}$$

$$p_{1_2} = \frac{3072}{2} * 2048 = \frac{3}{4}$$

$$w_{1_1} = \frac{1024}{3072} = \frac{1}{3}$$

$$w_{1_2} = \frac{2048}{3072} = \frac{2}{3}$$

$$v_{1_1} = 512$$

$$v_{2_1} = 2048$$

$$\Rightarrow L_2 = (1024 - 512) * 3/2 + (2048 - 2048) * 3/4 = 512 * 3/2 = 768$$

$$\Rightarrow l_{1_2} = 1/3 * 768 = 256$$

$$l_{2_2} = 2/3 * 768 = 512$$

The remaining proportional limits ($l_{1_2}$ and $l_{2_2}$) represent how the remaining $0,50 is divided to the classes: with $0,50 you get 512 kB on office hours and 1024 kB at other times, thus $l_{1_2}$= 256 and $l_{2_2}$= 512. The next equalization comes after 512kB and so forth. At the end user has consumed 512MB for class 1 and 3MB for class 2, which is in total $0,50+$1,5 = $2.

Although the invention has been described in the context of particular embodiments, various modifications are possible. For example, the rating device and the measuring device may be any appropriate device using any suitable protocol as is understood by a person skilled in the art. In certain embodiments, it might also be possible that the rating device and the measuring device are physically provided in a device. Even in that case, the simplifying effect of the invention allows an effective data delivery with minimal signalling between different network entities.

**Claims**

1. A method of controlling prepaid data services, the prepaid data services being divided into at least two service groups of different charging criteria in a network, the method being **characterized by** comprising:

   allocating (106, 202), in a measuring device (28), proportional data delivery limits for each service group individually as a proportion of the initial data delivery limit for the service group;
   measuring (204) use of resources for each of the service groups; and
   reallocating (210), in the measuring device, remaining free resources to the service groups based on pricing weights of the service groups to obtain new proportional data delivery limits for each service group individually for delivery of data after a service group has exceeded its proportional data delivery limit.

2. A method according to claim 1, further comprising receiving (200) a message (34) containing information about the initial data delivery limit for each service group from a rating device (26) in a measuring device (28).

3. A method according to claim 1 or claim 2, further comprising:

   reserving (100) resources (30) from a prepayment system (24); and
   setting (102), by the rating device (26), an initial data delivery limit for each service group based on the resources and information about the charging criteria.

4. A method according to any one of claims 1 to 3, further comprising defining a proportional data delivery limit for each service group as a proportion of the initial data delivery limit.

5. A method according to any one of the preceding claims, further comprising defining a pricing weight for each service group as a proportion of a sum of the proportional data delivery limits to the initial data delivery limit of the service group.

6. A method according to any one of the preceding claims, further comprising sending a report from the measuring device (28) to the rating device (26) after all of the reserved resources are used.

7. A method according to any preceding claim, further comprising defining the initial data delivery limit as a volume equivalent to a same amount of money for each service group.

8. A measuring device (28) for controlling prepaid data services divided into at least two service groups of different charging criteria in a network, the measuring device **characterised by** being configured:

   to allocate proportional data delivery limits for each of at least two service groups of different charging criteria individually as a proportion of the initial data delivery limit for the service group;
   to measure use of resources for each of the service groups; and
   to reallocate remaining free resources to the service groups based on pricing weights of the service groups to obtain new proportional data delivery limits for each service group individually for delivery of data when a service group exceeds its proportional data delivery limit.

9. A measuring device (28) according to claim 8, further configured to define a proportional data delivery limit for each service group as a proportion of the initial data delivery limit.

10. A measuring device (28) according to one of claim 8 and 9, further configured to define a pricing weight for each service group as a proportion of a sum of the proportional data delivery limits to the initial data delivery limit of the service group.

11. A measuring device (28) according to any one of claims 8 to 10, further configured to send a report from the measuring device (28) to the rating device (26) after all of the reserved resources are used.

12. A measuring device (28) according to any one of claims 8 to 11, further configured to define means for defining the initial data delivery limit as a volume equivalent to a same amount of money for each service group.

13. A system for controlling prepaid data services comprising
a prepayment system hosting prepaid resources,
a rating device configured to obtain information of the prepaid resources and of charging criteria of service groups and to set initial data delivery limits for the service groups based on the obtained information, and
a measuring device according to any one of claims 8 to 12.

14. A communication system configured for provision of prepaid services for the users thereof, the communication system comprising
at least one data communication network, and
a system according to claim 13.

15. A communication system in accordance with claim 14, wherein the at least one data communication network comprises a packet core communication network (10) for communication of data between users (18) and the measuring device (28) and a public data network (11) for communication of data between the measuring device (28) and providers (12, 14, 16) of the prepaid services.

16. A controller for controlling prepaid data services, the prepaid data services being divided into at least two service groups of different charging criteria in a network, the controller comprising:

   reserving means for reserving resources from a prepayment system (24);
   setting means for setting, by a rating device, an initial data delivery limit for each service group based on the resources and information about the charging criteria;
   sending means for sending a message containing information about the initial data delivery limits from the rating device to a measuring device; and
   a measuring device according to any one of claims 8 to 12.


**Patentansprüche**

1. Verfahren zum Steuern von Prepaid-Datendiensten, wobei die Prepaid-Datendienste in wenigstens zwei Dienstgruppen von unterschiedlichen Abrechnungskriterien geteilt werden, in einem Netz, wobei das Verfahren **dadurch gekennzeichnet ist, dass** es umfasst:

   Zuweisen (106, 202), in einer Erfassungsvorrichtung (28), proportionaler Datenlieferungslimits für jede Dienstgruppe einzeln, als einen Verhältnisanteil des anfänglichen Datenlieferungslimits für die Dienstgruppe;
   Erfassen (204) von Nutzung von Ressourcen für jede der Dienstgruppen; und
   Neuzuweisen (210), in der Erfassungsvorrichtung, verbleibender freier Ressourcen zu den Dienstgruppen, basierend auf Preisgewichtungen der Dienstgruppen, um neue proportionale Datenlieferungslimits für jede Dienstgruppe einzeln für Lieferung von Daten zu ermitteln, nachdem eine Dienstgruppe ihr proportionales Datenlieferungslimit überschritten hat.

2. Verfahren nach Anspruch 1, ferner umfassend Empfangen (200) einer Nachricht (34), welche Information über das anfängliche Datenlieferungslimit für jede Dienstgruppe enthält, von einer Rating-Vorrichtung (26) in einer Erfassungsvorrichtung (28).

3. Verfahren nach Anspruch 1 oder Anspruch 2, ferner umfassend:

   Reservieren (100) von Ressourcen (30) aus einem Vorauszahlungssystem (24); und
   Festlegen (102), durch die Rating-Vorrichtung (26), eines anfänglichen Datenlieferungslimits für jede Dienstgruppe, basierend auf den Ressourcen und Information über die Abrechnungskriterien.

4. Verfahren nach einem der Ansprüche 1 bis 3, ferner umfassend Definieren eines proportionalen Datenlieferungslimits für jede Dienstgruppe, als einen Verhältnisanteil des anfänglichen Datenlieferungslimits.

5. Verfahren nach einem der vorhergehenden Ansprüche, ferner umfassend Definieren einer Preisgewichtung für jede Dienstgruppe als ein Verhältnis einer Summe der proportionalen Datenlieferungslimits zu dem anfänglichen Datenlieferungslimit der Dienstgruppe.

6. Verfahren nach einem der vorhergehenden Ansprüche, ferner umfassend Senden eines Berichts von der Erfassungsvorrichtung (28) zu der Rating-Vorrichtung (26), nachdem alle der reservierten Ressourcen genutzt sind.

7. Verfahren nach einem der vorhergehenden Ansprüche, ferner umfassend Definieren des anfänglichen Datenlieferungslimits als ein Volumen, äquivalent einer gleichen Menge an Geld für jede Dienstgruppe.

8. Erfassungsvorrichtung (28) zum Steuern von Prepaid-Datendiensten, welche in wenigstens zwei Dienstgruppen von unterschiedlichen Abrechnungskriterien geteilt sind, in einem Netz, wobei die Erfassungsvorrichtung **dadurch gekennzeichnet ist, dass** sie konfiguriert ist zum:

   Zuweisen proportionaler Datenlieferungslimits für jede von wenigstens zwei Dienstgruppen von unterschiedlichen Abrechnungskriterien einzeln, als einen Verhältnisanteil des anfänglichen Datenlieferungslimits für die Dienstgruppe;
   Erfassen von Nutzung von Ressourcen für jede der Dienstgruppen; und
   Neuzuweisen verbleibender freier Ressourcen zu den Dienstgruppen, basierend auf Preisgewichtungen der Dienstgruppen, um neue proportionale Datenlieferungslimits für jede Dienstgruppe einzeln für Lieferung von Daten zu ermitteln, wenn eine Dienstgruppe ihr proportionales Datenlieferungslimit überschreitet.

9. Erfassungsvorrichtung (28) nach Anspruch 8, ferner konfiguriert zum Definieren eines proportionalen Datenlieferungslimits für jede Dienstgruppe, als einen Verhältnisanteil des anfänglichen Datenlieferungslimits.

10. Erfassungsvorrichtung (28) nach einem der Ansprüche 8 und 9, ferner konfiguriert zum Definieren einer Preisgewichtung für jede Dienstgruppe als ein Verhältnis einer Summe der proportionalen Datenlieferungslimits zu dem anfänglichen Datenlieferungslimit der Dienstgruppe.

11. Erfassungsvorrichtung (28) nach einem der Ansprüche 8 bis 10, ferner konfiguriert zum Senden eines Berichts von der Erfassungsvorrichtung (28) zu der Rating-Vorrichtung (26), nachdem alle der reservierten Ressourcen genutzt sind.

12. Erfassungsvorrichtung (28) nach einem der Ansprüche 8 bis 11, ferner konfiguriert zum Definieren von Mitteln zum Definieren des anfänglichen Datenlieferungslimits als ein Volumen, äquivalent einer gleichen Menge an Geld für jede Dienstgruppe.

13. System zum Steuern von Prepaid-Datendiensten, umfassend
   ein Vorauszahlungssystem, welches Prepaid-Ressourcen hostet,
   eine Rating-Vorrichtung, konfiguriert zum Ermitteln von Information über die Prepaid-Ressourcen und über Abrechnungskriterien von Dienstgruppen und zum Festlegen von anfänglichen Datenlieferungslimits für die Dienstgruppen, basierend auf der ermittelten Information, und
   eine Erfassungsvorrichtung nach einem der Ansprüche 8 bis 12.

14. Kommunikationssystem, konfiguriert zur Bereitstellung von Prepaid-Diensten für die Nutzer derselben, wobei das Kommunikationssystem umfasst:

   wenigstens ein Datenkommunikationsnetz, und
   ein System nach Anspruch 13.

15. Kommunikationssystem nach Anspruch 14, wobei das wenigstens eine Datenkommunikationsnetz ein Paket-Core-Kommunikationsnetz (10) umfasst, zur Kommunikation von Daten zwischen Nutzern (18) und der Erfassungsvorrichtung (28), und ein öffentliches Datennetz (11) zur Kommunikation von Daten zwischen der Erfassungsvorrichtung (28) und Anbietern (12, 14, 16) der Prepaid-Dienste.

16. Steuerung zum Steuern von Prepaid-Datendiensten, wobei die Prepaid-Datendienste in wenigstens zwei Dienstgruppen von unterschiedlichen Abrechnungskriterien geteilt werden, in einem Netz, wobei die Steuerung umfasst:

Reserviermittel zum Reservieren von Ressourcen aus einem Vorauszahlungssystem (24);
Festlegemittel zum Festlegen, durch eine Rating-Vorrichtung, eines anfänglichen Datenlieferungslimits für jede Dienstgruppe, basierend auf den Ressourcen und Information über die Abrechnungskriterien;
Sendemittel zum Senden einer Nachricht welche Information über die anfänglichen Datenlieferungslimits enthält, von der Rating-Vorrichtung an eine Erfassungsvorrichtung; und
eine Erfassungsvorrichtung nach einem der Ansprüche 8 bis 12.

**Revendications**

1. Procédé destiné à commander des services prépayés de transmission de données, les services prépayés de transmission de données étant divisés en au moins deux groupes de services de différents critères de facturation dans un réseau, le procédé étant **caractérisé en ce qu'**il comporte les étapes ci-après consistant à :

affecter (106, 202), dans un dispositif de mesure (28), des limites de fourniture de données proportionnelles pour chaque groupe de services individuellement en proportion de la limite de fourniture de données initiale du groupe de services ;
mesurer (204) l'utilisation des ressources de chacun des groupes de services ; et
réaffecter (210), dans le dispositif de mesure, des ressources disponibles restantes aux groupes de services sur la base de pondérations de tarification des groupes de services pour obtenir de nouvelles limites de fourniture de données proportionnelles de chaque groupe de services individuellement, pour délivrer des données après qu'un groupe de services a dépassé sa limite de fourniture de données proportionnelle.

2. Procédé selon la revendication 1, comprenant en outre l'étape consistant à recevoir (200) un message (34) contenant des informations connexes à la limite de fourniture de données initiale de chaque groupe de services à partir d'un dispositif de classement (26) dans un dispositif de mesure (28).

3. Procédé selon la revendication 1 ou 2, comprenant en outre les étapes ci-après consistant à :

réserver (100) des ressources (30) à partir d'un système de paiement anticipé (24) ; et
définir (102), par le biais du dispositif de classement (26), une limite de fourniture de données initiale pour chaque groupe de services sur la base des ressources et des informations connexes aux critères de facturation.

4. Procédé selon l'une quelconque des revendications 1 à 3, comprenant en outre l'étape consistant à définir une limite de fourniture de données proportionnelle de chaque groupe de services en proportion de la limite de fourniture de données initiale.

5. Procédé selon l'une quelconque des revendications précédentes, comprenant en outre l'étape consistant à définir une pondération de tarification pour chaque groupe de services en proportion d'une addition des limites de fourniture de données proportionnelles à la limite de fourniture de données initiale du groupe de services.

6. Procédé selon l'une quelconque des revendications précédentes, comprenant en outre l'étape consistant à envoyer un rapport du dispositif de mesure (28) au dispositif de classement (26) après que toutes les ressources réservées ont été utilisées.

7. Procédé selon l'une quelconque des revendications précédentes, comprenant en outre l'étape consistant à définir la limite de fourniture de données initiale en tant qu'un volume équivalent à un même montant pour chaque groupe de services.

8. Dispositif de mesure (28) destiné à commander des services prépayés de transmission de données divisés en au moins deux groupes de services de différents critères de facturation dans un réseau, le dispositif de mesure étant configuré de manière à :

affecter des limites de fourniture de données proportionnelles pour chaque groupe de services parmi au moins deux groupes de services de différents critères de facturation en proportion de la limite de fourniture de données initiale du groupe de services ;

mesurer l'utilisation des ressources de chacun des groupes de services ; et

réaffecter des ressources disponibles restantes aux groupes de services sur la base de pondérations de tarification des groupes de services pour obtenir de nouvelles limites de fourniture de données proportionnelles de chaque groupe de services individuellement, pour délivrer des données après qu'un groupe de services a dépassé sa propre limite de fourniture de données proportionnelle.

9. Dispositif de mesure (28) selon la revendication 8, configuré en outre de manière à définir une limite de fourniture de données proportionnelle de chaque groupe de services en proportion de la limite de fourniture de données initiale.

10. Dispositif de mesure (28) selon l'une quelconque des revendications 8 et 9, configuré en outre de manière à définir une pondération de tarification pour chaque groupe de services en proportion d'une addition des limites de fourniture de données proportionnelles à la limite de fourniture de données initiale du groupe de services.

11. Dispositif de mesure (28) selon l'une quelconque des revendications 8 à 10, configuré en outre de manière à envoyer un rapport du dispositif de mesure (28) au dispositif de classement (26) après que toutes les ressources réservées ont été utilisées.

12. Dispositif de mesure (28) selon l'une quelconque des revendications 8 à 11, configuré en outre de manière à définir des moyens pour définir la limite de fourniture de données initiale en tant qu'un volume équivalent à un même montant pour chaque groupe de services.

13. Système destiné à commander des services prépayés de transmission de données comprenant
un système de paiement anticipé hébergeant des ressources prépayées,
un dispositif de classement configuré de manière à obtenir des informations des ressources prépayées et de critères de facturation de groupes de services, et à définir des limites de fourniture de données initiales des groupes de services sur la base des informations obtenues, et
un dispositif de mesure selon l'une quelconque des revendications 8 à 12.

14. Système de communication configuré de manière à fournir des services prépayés à des utilisateurs de ces services, le système de communication comprenant
au moins un réseau de communication de données, et
un système selon la revendication 13.

15. Système de communication selon revendication 14, dans lequel ledit au moins un réseau de communication de données comprend un réseau de communication par paquets de base (10) pour la communication de données entre des utilisateurs (18) et le dispositif de mesure (28) et un réseau public de transmission de données (11) pour la communication de données entre le dispositif de mesure (28) et des fournisseurs (12, 14, 16) des services prépayés.

16. Contrôleur pour commander des services prépayés de transmission de données, les services prépayés de transmission de données étant divisés en au moins deux groupes de services de différents critères de facturation dans un réseau, le contrôleur comprenant :

des moyens de réservation permettant de réserver des ressources à partir d'un système de paiement anticipé (24) ;
des moyens de définition permettant de définir, par le bais d'un dispositif de classement, une limite de fourniture de données initiale de chaque groupe de services sur la base des ressources et des informations connexes aux critères de facturation ;
des moyens de transmission pour envoyer un message contenant des informations connexes aux limites de fourniture de données initiales du dispositif de classement à un dispositif de mesure ; et
un dispositif de mesure selon l'une quelconque des revendications 8 à 12.

Fig. 1

| RESERVING RESOURCES FROM THE PREPAYMENT SYSTEM | 100 |

| SETTING INITIAL DATA DELIVERY LIMITS IN THE RATING DEVICE | 102 |

| SENDING A MESSAGE CONTAINING THE INITIAL DATA DELIVERY LIMITS FROM THE RATING DEVICE TO THE MEASURING DEVICE | 104 |

| ALLOCATING PROPORTIONAL DATA DELIVERY LIMITS IN THE MEASURING DEVICE | 106 |

| REALLOCATING THE REMAINING RESOURCES IN THE MEASURING DEVICE WHEN A PROPORTIONAL DATA DELIVERY LIMIT IS EXCEEDED | 108 |

Fig. 2

RECEIVING INITIAL DATA DELIVERY LIMITS
FROM THE RATING DEVICE    ⟿ 200

CALCULATING PROPORTIONAL DATA DELIVERY
LIMIT AND PRICING WEIGHT FOR EACH
SERVICE GROUP AND ALLOCATING
PROPORTIONAL DATA DELIVERY LIMITS    ⟿ 202

MEASURING THE CONSUMPTION OF EACH
SERVICE GROUP    ⟿ 204

COMPARING THE CONSUMPTION TO THE
PROPORTIONAL DATA DELIVERY LIMIT OF
EACH SERVICE GROUP    ⟿ 206

WHEN A SERVICE GROUP EXCEEDS ITS
PROPORTIONAL DATA DELIVERY LIMIT,
CALCULATING THE REMAINING RESOURCES    ⟿ 208

REALLOCATING THE REMAINING
RESOURCES BETWEEN THE SERVICE
GROUPS BY USING PRICING WEIGHTS    ⟿ 210

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03025870 A2
- US 20030014367 A1
- WO 0206760081 A